# EUROPÄISCHE PATENTSCHRIFT

(11) **EP 3 027 874 B1**
(45) Veröffentlichungstag und Bekanntmachung des Hinweises auf die Patenterteilung: **29.03.2017**
(21) Anmeldenummer: 14744831.0
(22) Anmeldetag: 28.07.2014
(51) Int. Cl.: F02F 3/00, F02F 3/22

(54) **LEICHTBAU EINES DIESELKOLBENS**
LIGHTWEIGHT CONSTRUCTION OF A DIESEL PISTON
CONSTRUCTION LÉGÈRE D'UN PISTON DIESEL

(30) Priorität: 29.07.2013 DE 102013214738
(43) Veröffentlichungstag der Anmeldung: 08.06.2016
(73) Patentinhaber: Federal-Mogul Nürnberg GmbH, 90441 Nürnberg (DE)
(72) Erfinder: FREIDHAGER, Marcus, 90491 Nürnberg (DE); HEINZ, Paul, 90427 Nürnberg (DE); BÖHM, Roland, 90617 Puschendorf (DE)
(74) Vertreter: Hoffmann Eitle
(86) Internationale Anmeldenummer: PCT/EP2014/066149
(87) Internationale Veröffentlichungsnummer: WO 2015/014779

(56) Entgegenhaltungen:
- EP-A2- 1 348 859
- DE-A1-102007 058 789
- DE-C1- 19 734 654
- US-A- 5 839 351
- US-A1- 2003 037 671

## Beschreibung

### TECHNISCHES GEBIET

Die Erfindung betrifft einen Kolben für einen Verbrennungsmotor, insbesondere für einen Dieselmotor. Der Kolben ist insbesondere als Gusskolben, etwa Aluminium oder einer Aluminiumlegierung, ausgelegt.

### STAND DER TECHNIK

Mit zunehmender Leistungsoptimierung und/oder Verbrauchsoptimierung von Verbrennungsmotoren nehmen die thermischen und mechanischen Belastungen an den Kolben zu. Gerade im Hinblick auf die Verbrauchsoptimierung ist es wünschenswert, die Belastbarkeit und Dauerhaftigkeit des Kolbens selbst bei einer Verringerung des Kolbengewichts beizubehalten oder sogar zu verbessern. Dazu werden verschiedene Ansätze verfolgt, worunter eine Optimierung des Kolbenmaterials, etwa der Aluminiumlegierung, eine Verbesserung der Kühlarchitektur und andere Maßnahmen fallen.

Eine Verbesserung der Kühlarchitektur beschreibt beispielsweise die DE 10 2009 027 148 A1. Einen anderen Ansatz zur Gewichts/Leistungs-Optimierung ist in der DE 10 2007 058 789 A1 beschrieben, in der die besondere Gestaltung von Verstärkungsrippen zu einer Verringerung des Kolbengewichts führt, ohne dabei die Festigkeit des Kolbens zu beeinträchtigen.

Weitere Maßnahmen zur Gewichtsreduzierung des Kolbens unter Beibehaltung oder sogar Verbesserung der mechanischen und thermischen Festigkeit sind im Hinblick auf eine Verbrauchsoptimierung des Verbrennungsmotors wünschenswert.

### DARSTELLUNG DER ERFINDUNG

Eine Aufgabe der Erfindung besteht darin, einen Kolben, insbesondere einen Gusskolben aus Aluminium oder einer Aluminiumlegierung bereitzustellen, der bezüglich der thermischen/mechanischen Festigkeit sowie Gewicht optimiert ist.

Die Aufgabe wird mit einem Kolben mit den Merkmalen des Anspruchs 1 gelöst.

Der erfindungsgemäße Kolben weist einen Kolbenboden, einen zylindrischen Kolbenkopf, der sich an den Kolbenboden anschließt, und einen wenigstens teilweise hohlen Kolbenschaft auf, der an dem Kolbenkopf auf der dem Kolbenboden abgewandten Seite angeformt ist und der zwei gegenüberliegende Schaftwandabschnitte sowie zwei gegenüberliegende, die Schaftwandabschnitte verbindende Verbindungswände aufweist, wobei die Verbindungswände jeweils eine Bolzenbohrung aufweisen. In dem Kolbenkopf ist ein ringförmiger Kühlkanal mit mindestens einer Zuflussöffnung und mindestens einer Abflussöffnung vorgesehen. Ferner sind die Schaftwandabschnitte jeweils so zum Kolbenkopf hin verbreitert, dass die Sektorlänge der am Kolbenkopf angeformten Breite des Schaftwandabschnitts größer als die Sektorlänge der dem Kolbenkopf abgewandten Seite des Schaftwandabschnitts ist.

Mit "Sektorlänge" ist hier die Länge gemeint, mit der sich der entsprechende Schaftwandabschnitt entlang des zylindrischen Umfangs des Kolbens erstreckt. Die Bezeichnungen "Zuflussöffnung" und "Abflussöffnung" können durchaus synonym verstanden werden, da der Einlass und der Auslass in den Kühlkanal vertauscht werden können oder beide Öffnungen gleichzeitig als Einlässe und Auslässe dienen können.

Die Erfindung zielt darauf ab, die Aufgabe durch ein synergetisches Zusammenwirken mehrerer Maßnahmen, d.h. aus einem im Vergleich zum Stand der Technik umfassenderen Blick zu lösen. Dies wird dadurch erzielt, dass eine Kühlarchitektur, wodurch sich die Temperaturen und damit die thermischen und mechanischen Belastungen im Bereich des Kolbenbodens wirkungsvoll reduzieren lassen, mit einem auf die Kühlarchitektur optimierten Kolbenschaftdesign kombiniert wird. Die Verbreiterung der Schaftwandabschnitte zum Kolbenkopf hin bewirkt eine Stabilisierung in den Bereichen hoher Belastung, ermöglicht aber zugleich ein Zurückversetzen der Verbindungswände nach innen, wodurch aufgrund des damit reduzierten Abstands zwischen den beiden Bolzenbohrungen Gewicht eingespart wird. Die Gewichtsersparnis begründet sich zum einen daraus, dass durch die Versetzung der Verbindungswände nach innen die Umfangslänge bzw. Mantelfläche des Kolbenschafts verringert ist. Zum anderen können die Wanddicken des Kolbenschafts verringert werden, da die Kraftverteilung aufgrund des geringen Abstands zwischen den beiden Bolzenbohrungen günstiger ist. Wichtig hierbei ist, dass das oben beschriebene Kolbenschaftdesign nur dann die beschriebenen Wirkungen entfaltet und nur dann mit einer erheblichen Gewichtsersparnis realisierbar ist, wenn eine Kühlung im Kolbenkopf stattfindet.

Vorzugsweise befindet sich die Zuflussöffnung und/oder Abflussöffnung des ringförmigen Kühlkanals im Bereich eines Schaftwandabschnittes und/oder im Bereich einer Verbindungswand. Damit kann der Kühlölstrahl an der Innenseite des entsprechenden Schaftwandabschnitts und/oder an der Innenseite der entsprechenden Verbindungswand geführt werden, wodurch der Ölstrahl verlustarm in den Kühlkanal eingespritzt werden kann. Damit erfolgt eine ausgesprochen wirkungsvolle Kühlung, die wiederum eine Optimierung des Kolbenschaftdesigns zulässt.

Vorzugsweise befindet sich die kürzeste Sektorlänge zumindest eines der Schaftwandabschnitte zwischen der am Kolbenkopf angeformten Seite und der dem Kolbenkopf abgewandten Seite. Mit anderen Worten weist die Kante des entsprechenden Schaftwandabschnitts, die dem Kolbenkopf abgewandt ist, nicht die kürzeste Sektorlänge auf. Vielmehr findet eine Verjüngung des Schaftwandabschnitts (ausgehend vom Kolbenboden) auf eine minimale Sektorlänge und anschließend eine abermalige Verbreiterung statt, wodurch eine Optimierung der Anbindung des entsprechenden Schaftwandabschnitts an die Verbindungswände stattfindet.

Vorzugsweise liegt die oben beschriebene Sektorlänge näher an der Seite des Kolbenkopfes als der dem Kolbenkopf abgewandten Seite. Mit anderen Worten findet ausgehend vom Kolbenkopf zunächst eine rasche Verjüngung des entsprechenden Schaftwandabschnitts statt, anschließend eine langsame Verbreiterung. Mit dieser Schaftwandgeometrie findet eine weitere Optimierung im Hinblick auf das Verhältnis zwischen Gewicht und Stabilität des Kolbens statt.

Vorzugsweise weisen die Schaftwandabschnitte jeweils zwei Kanten auf, welche die am Kolbenkopf angeformte Seite des Schaftwandabschnitts mit der dem Kolbenkopf abgewandten Seite desselben Schaftwandabschnitts verbinden, wobei die Kanten ausgehend vom Kolbenboden einen konvex gekrümmten Abschnitt aufweisen. Die konvexe Krümmung stabilisiert die Anbindung des Schaftwandabschnitts im Bereich des Kolbenkopfs an die entsprechenden Verbindungswände, wodurch die Festigkeit und Haltbarkeit des Kolbens bei nicht oder nur kaum verändertem Gewicht verbessert werden.

Vorzugsweise gehen die konvex gekrümmten Abschnitte der Kanten jeweils in eine konkave Krümmung über und erstrecken sich anschließend im Wesentlichen geradlinig. Eine Krümmung in der nicht unmittelbaren Umgebung des Kolbenkopfes ist hier für die Anbindung an die Verbindungswände nicht unbedingt erforderlich.

Vorzugsweise verlaufen die geradlinigen Abschnitte nicht parallel, vielmehr vergrößert sich der Abstand ausgehend von der minimalen Sektorlänge zur Seite des Schaftabschnitts, die dem Kolbenkopf abgewandt ist. Die Aufweitung findet bevorzugt mit einer im Vergleich zum konvexen Abschnitt geringeren oder sogar deutlich geringeren Neigung statt. Die hier beschriebene Aufweitung stellt einen guten Kompromiss aus Stabilität des Kolbenschafts und Gewichtsersparnis dar.

Vorzugsweise weisen die Verbindungswände jeweils eine Bolzennabe auf, in der sich die betreffende Bolzenbohrung befindet, wobei die Bolzennaben eine im Vergleich zu anderen Abschnitten der Verbindungswände vergrößerte Wandstärke aufweisen. Die Bereiche der Bolzenbohrung sind Bereiche hoher mechanischer und thermischer Belastung. Daher ist es im Hinblick auf die Stabilität des Bolzens wichtig, dass die Bolzennaben eine große Wandstärke aufweisen. Andere Abschnitte, auch solche Abschnitte, welche eine Verbindung mit den Schaftwandabschnitten oder einen Übergang in die Schaftwandabschnitte darstellen, können im Vergleich dazu eine geringere Wanddicke aufweisen, ohne dass die Stabilität des Kolbens merklich beeinträchtigt wird. Die besondere Konzentration des Kolbenschaftmaterials auf die Bolzenbohrungen wird dadurch begünstigt, dass die erfindungsgemäßen Schaftwandabschnitte eine Zurückversetzung der Verbindungswände in Richtung des Schaftinneren erlauben. Zur weiteren Verstärkung der Bolzennaben können diese jeweils mit einer Messingbuchse ausgestattet sein.

Vorzugsweise erstrecken sich die Bolzennaben ausgehend von den Abschnitten dünnerer Wandstärke der betreffenden Verbindungswände im Wesentlichen nach außen. Durch das oben beschriebene Kolbenschaftdesign können die Verbindungswände sehr weit ins Innere versetzt werden, was im Hinblick auf eine Gewichtsersparnis wie oben dargelegt von Vorteil ist. Dadurch stehen die Bolzennaben im Vergleich zu den dazu dünneren Abschnitten der Verbindungswände nach außen hervor.

Vorzugsweise ist der Kolben aus Aluminium oder einer Aluminiumlegierung gefertigt. Schmiedekolben besitzen im Vergleich zu Gusskolben im Allgemeinen ein dichteres Metallgefüge, sie sind dadurch bei vergleichbarer Festigkeit leichter als Gusskolben. Somit spielen Maßnahmen zur Verringerung des Gewichts gerade bei Gusskolben, etwa aus einer Aluminiumlegierung eine sehr wichtige Rolle. Eine einszu-eins Übertragung struktureller Merkmale von einem Schmiedekolben auf einen Gusskolben wird daher vom Fachmann in der Regel nicht in Betracht gezogen.

Vorzugsweise sind zwei Verstärkungsrippen vorgesehen, die weitgehend parallel zur Bolzenachse verlaufen, am Kolbenkopf angeformt sind und sich in den Hohlraum des Kolbenschafts erstrecken. Die Verstärkungsrippen stabilisieren zum einen den Kolbenschaft in Bereichen hoher Belastung. Zum anderen ermöglichen sie eine Reduzierung der Wandstärke des Kolbenschafts und damit trotz des zusätzlichen Materials für die Verstärkungsrippen eine Verringerung des Gesamtgewichts. Die Verstärkungsrippen können recht klein ausgebildet sein, sodass sie sich gemäß einer bevorzugten Ausführungsform nur etwa maximal bis zum unteren Scheitelpunkt (d.h. der Scheitelpunkt, der dem Kolbenkopf am nächsten liegt) der Bolzenbohrungen in den Kolbenschaft hineinerstrecken. Die Verstärkungsrippen sind bevorzugt an den Bolzennaben angeformt und verbinden diese auf eine kontinuierliche Weise. In den Bereichen der Anbindung können die Verstärkungsrippen eine erhöhte Wandstärke aufweisen.

Vorzugsweise sind die Verstärkungsrippen bogenförmig ausgebildet, erstrecken sich im Wesentlichen von einer Bolzenbohrung zur anderen Bolzenbohrung, sind am Kolbenkopf angeformt und erstrecken sich in den Hohlraum des Kolbenschafts. Zusätzlich oder alternativ zu den oben besprochenen Merkmalen, welche die Verstärkungsrippen betreffen, sind sie also vorzugsweise entlang ihrer Erstreckungsrichtung parallel zum Kolbenboden gekrümmt, wodurch sich eine Verbesserung der mechanischen Festigkeit und Haltbarkeit des Kolbens ergibt.

Die Zuflussöffnung und die Abflussöffnung befinden sich zwischen einer Verstärkungsrippe und dem nächstliegenden Schaftabschnitt. Dadurch ist noch eine bessere Führung des Spritzölstrahls möglich, was zu einer verbesserten Kühlwirkung und damit zu einer Verbesserung der thermischen und mechanischen Festigkeit des Kolbens führt.

Die Erfindung wurde anhand eines Leichtbaukolbens beschrieben. Weitere Vorteile und Merkmale der Erfindung werden aus der folgenden Beschreibung bevorzugter Ausführungsformen ersichtlich. Die dort und die oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen.

### KURZE BESCHREIBUNG DER FIGUREN

Figur 1 ist eine dreidimensionale Darstellung eines Kolbens von schräg oben;
Figur 2 zeigt den Kolben der Figur 1 in einer teilweise transparenten Darstellungsform;
Figur 3 zeigt den Kolben der Figur 1 von schräg unten;
Figur 4 ist eine Seitenansicht des Kolbens der Figur 1;
Figur 5 ist eine andere Seitenansicht des Kolbens der Figur 1;
Figur 6 zeigt den Kolben der Figur 1 von unten;
Figur 7 ist eine Schnittansicht des Kolbens der Figur 1;
Figur 8 ist eine dreidimensionale Ansicht des aufgeschnittenen Kolbens der Figur 1;
Figur 9 ist eine Seitenansicht eines Kolbens gemäß einer zweiten Ausführungsform;
Figur 10 zeigt den Kolben der Figur 9 von unten;
Figur 11 ist eine weitere Seitenansicht des Kolbens der Figur 9;
Figur 12 zeigt einen nicht erfindungsgemäßen Kolben von unten;
Figur 13 zeigt den Kolben der Figur 12 von der Seite;
Figur 14 ist eine weitere Seitenansicht des Kolbens der Figur 12;
Figur 15 zeigt den Kolben der Figur 12 von schräg unten.

### WEGE ZUR AUSFÜHRUNG DER ERFINDUNG

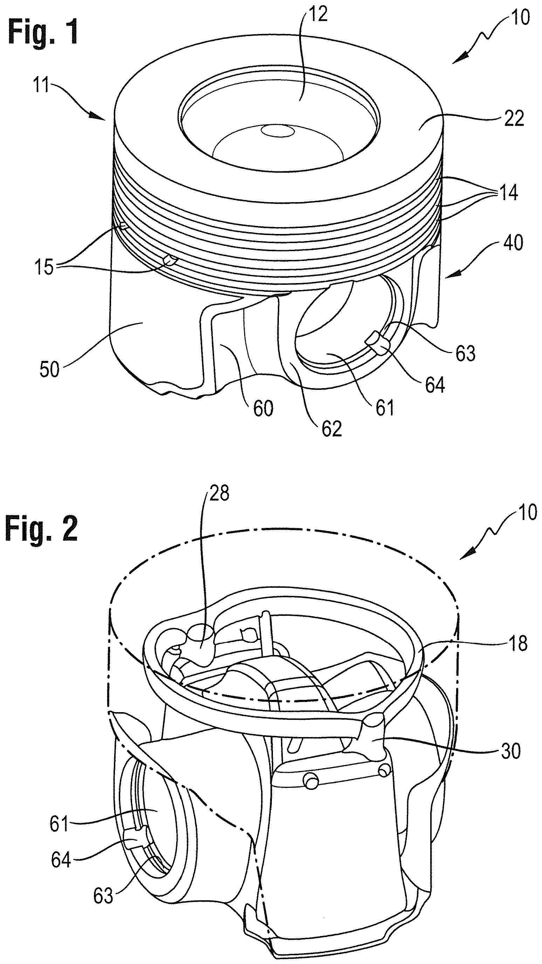

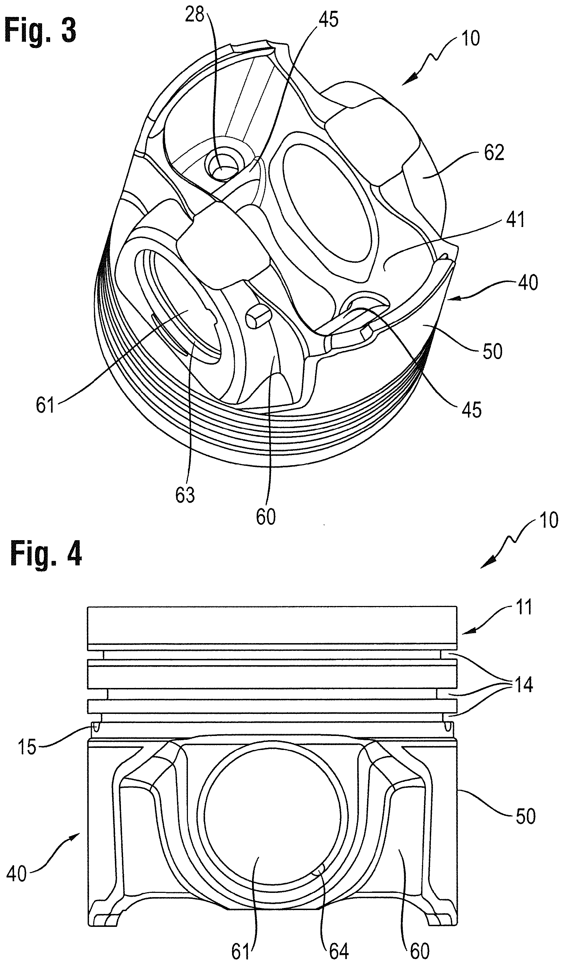

Die Figuren 1 bis 8 zeigen einen Kolben 10 gemäß einer ersten Ausführungsform in verschiedenen Ansichten und Perspektiven. Die Bezugszeichen werden einheitlich verwendet und werden nicht für jede Figur neu beschrieben. Darüber hinaus sind manche Bezugszeichen in der einen oder anderen Ansicht weggelassen worden, wenn es die Übersichtlichkeit erforderte.

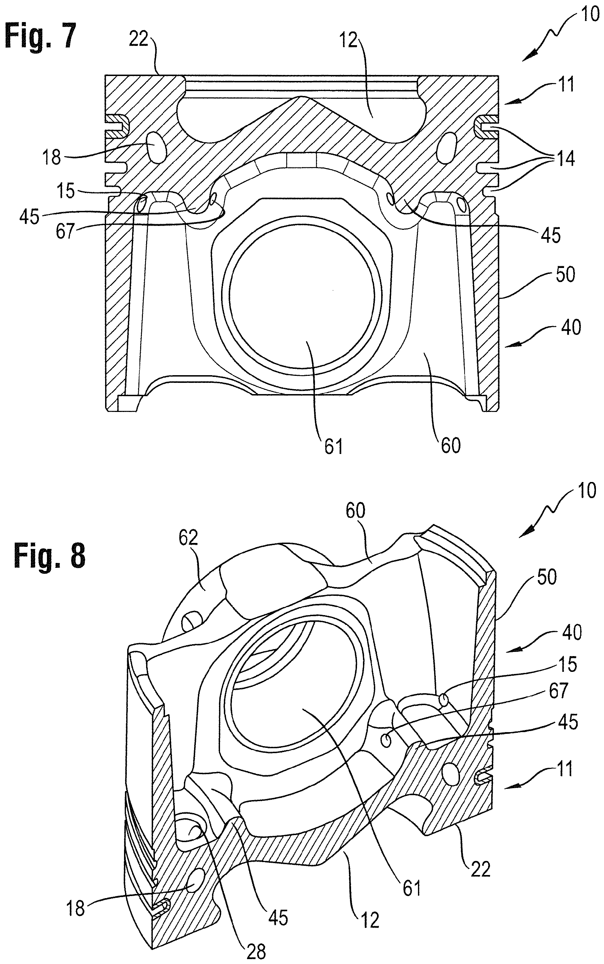

Figur 1 zeigt den Kolben 10 in einer dreidimensionalen Ansicht von schräg oben. Der Kolben 10, der vorzugsweise aus Aluminium oder einer Aluminiumlegierung gegeossen ist, weist eine Brennraummulde 12 auf, die im vorliegenden Beispiel w-förmig ist, wie es besonders deutlich aus der Figur 7 hervorgeht. Dort ist der Kolben 10 in einer Schnittansicht gezeigt. Ausgehend vom Kolbenboden 22 erstreckt sich die Brennraummulde 12 in den Kolbenkopf 11. Die Krümmung der die Brennraummulde 12 ausbildenden Wand ist zunächst konvex, geht anschließend in eine konkave Krümmung über, die hinterschnittartig nicht nur in die Tiefe sondern auch in die Breite des Kolbenkopfes 11 einschneidet, weist daran anschließend einen etwa geradlinigen Abschnitt auf, der in einen zentral liegenden Vorsprung (der mittlere Vorsprung des "w") übergeht. Dieser Kurvenverlauf ist rotationssymmetrisch, d.h. im Schnitt der Figur 7 spiegelsymmetrisch, relativ zur Mittelachse des Kolbens 10.

Mehrere Ringnuten 14 für nicht dargestellte Kolbenringe sind vorgesehen. In eine oder mehrere der Ringnuten 14 können Bohrungen, Sacklöcher, Durchgangsöffnung oder andere Öffnungen 15 eingebracht sein, um die Ölversorgung am Kolben und im Schaftinneren zu verbessern. Durch die Öffnungen 15 kann Öl, das von den nicht dargestellten Kolbenringen abgestreift wird, beispielsweise ins Kolbeninnere transportiert werden.

Im Kolbenkopf 11 befindet sich ein ringförmiger Kühlkanal 18, der in der Figur 2 gezeigt ist und auch aus den Figuren 7 und 8 hervorgeht. Der Kühlkanal 18 verläuft ungefähr kreisförmig und konzentrisch zum zylindrischen Umfang des Kolbens 10. Der Durchmesser des Kühlkanalrings ist so angepasst, dass er in der Nähe der größten Vertiefungen der Brennraummulde 12 vorgesehen ist und gleichzeitig einen ausreichenden Abstand dazu aufweist, um die mechanische Festigkeit des Kolbenkopfes 11 aufgrund einer etwaigen dünnen Wandstärke zwischen Brennraummulde 12 und Kühlkanal 18 nicht zu beeinträchtigen. Aus der Figur 2 ist ersichtlich, dass der Kühlkanal 18 nicht notwendigerweise exakt in einer Ebene verlaufen muss, die parallel zum Kolbenboden 22 vorliegt. Vielmehr weist der Kühlkanal 18 im vorliegenden Beispiel eine geschwungene Form auf, bei der hochliegende Bereiche und tiefliegende Bereiche (in der Richtung der Kolbenachse) auf eine sanft gekrümmte Art und Weise miteinander verbunden sind.

Der Kühlkanal 18 weist eine Kühlmittelzuflussöffnung 28 und eine Kühlmittelabflussöffnung 30 auf. Die Kühlmittelzuflussöffnung 28 und die Kühlmittelabflussöffnung 30 erstrecken sich in den Hohlraum des Kolbens 10, der vom Kolbenschaft 40 definiert und weiter unten detaillierter beschrieben wird. Vorzugsweise sind die Kühlmittelzuflussöffnung 28 und die Kühlmittelabflussöffnung 30 an den tiefgelegenen Bereichen des Kühlkanals 18 vorgesehen, wie es aus der Figur 2 hervorgeht. In die Kühlmittelzuflussöffnung 28 oder die Kühlmittelabflussöffnung 30 kann Kühlmittel aktiv über eine nicht dargestellte Düse eingespritzt werden. Zusätzlich oder alternativ kann die Versorgung über Spritzöl erfolgen. Außerdem tritt Kühlmittel aus der Kühlmittelzuflussöffnung 28 und/oder Kühlmittelabflussöffnung 30 aus und erreicht aufgrund der günstigen Lage der Öffnungen zu kühlende und zu schmierende Bereiche des Kolbenbolzens, der Lagerung des Bolzens in den Bolzenbohrungen und der Verbindung zwischen Kolbenbolzen und Pleuelauge. Der Übersichtlichkeit wegen wurde auf eine Darstellung des Kolbenbolzens und des Pleuels verzichtet.

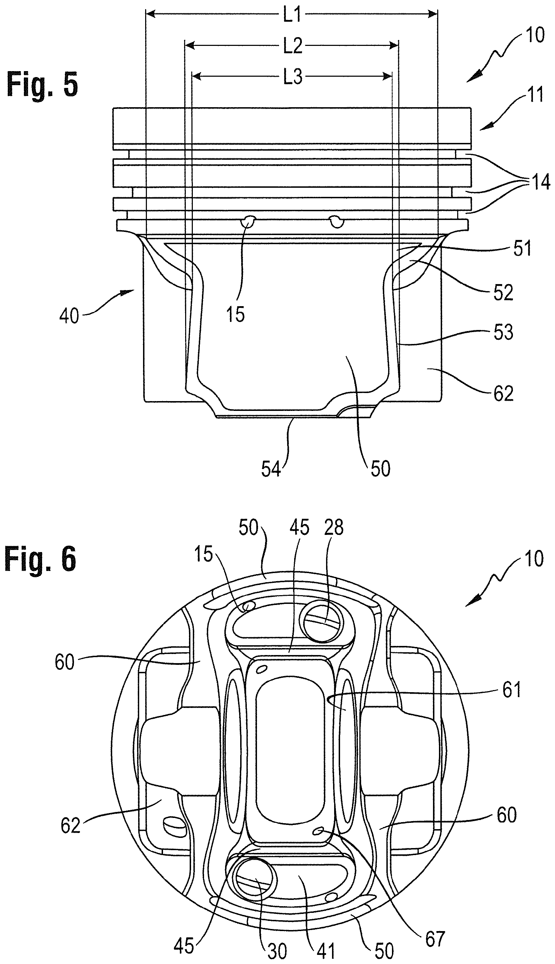

Der Kolbenschaft 40 weist zwei gegenüberliegende Schaftwandabschnitte 50 und zwei gegenüberliegende, die Schaftwandabschnitte 50 verbindende Verbindungswände 60 auf. Die Verbindungswände 60 sind bezüglich des zylindrischen Kolbenkopfes 11 nach innen versetzt, sodass die Gesamtkontur im Schnitt der Figur 6 des Kolbenschafts 40 keine kreiszylindrische, sondern eher eine rechteckige Form annimmt. Hierbei weisen die Schaftwandabschnitte 50 jedoch in Übereinstimmung mit der kreiszylindrischen Kontur des Kolbenkopfes 11 einen kreiszylindrischen Bogen auf, der in im Wesentlichen geradlinige Verbindungswände 60 übergeht. Hierbei ist festzuhalten, dass die Verbindungswände 60 nicht exakt geradlinig sein müssen, sondern, wie es besonders deutlich aus der Figur 6 hervorgeht, leicht gekrümmt oder geschwungen sein können. Insbesondere in den Verbindungsbereichen mit den Schaftwandabschnitten 50 weisen die Verbindungswände 60 eine nach außen gerichtete Krümmung auf, wodurch die Verbindungsbereiche zwischen Schaftwandabschnitt 50 und Verbindungswand 60 zur Stabilisierung aufgeweitet sein können.

Durch die Versetzung der Verbindungswände 60 nach innen ist der Hohlraum 41 des Kolbenschafts 40 vergleichsweise schmal. In den Verbindungswänden 60 ist jeweils eine Bolzenbohrung 61 vorgesehen, die mit Bolzennaben 62 verstärkt sind. Die Bolzenbohrungen 61 können ein oder mehrere seitliche Aussparungen (side relief) 64 aufweisen. An der Unterseite des Kolbens 10 sind die Bolzennaben 62 abgeflacht, wie es besonders deutlich aus der Figur 6 hervorgeht. Die Bolzenbohrungen 61 können mit einem Sicherungsring ausgestattet sein, der in einer in der Bolzenbohrung 61 ausgebildeten Nut 63 eingebracht ist.

Parallel zur Bolzenachse, die durch die beiden Bolzenbohrungen 61 vorgegeben ist, erstrecken sich zwei Verstärkungsrippen 45. Die beiden Verstärkungsrippen 45 sind symmetrisch auf beiden Seiten des nicht gezeigten Bolzens vorgesehen und verbinden die gegenüberliegenden Verbindungswände 60 im Bereich der Rückseite der Bolzennaben 62. Die Verstärkungsrippen 45 erstrecken sich in den Hohlraum des Kolbenschafts 40. Im vorliegenden Beispiel enden diese auf der Höhe entlang der Kolbenachse ungefähr dort, wo der Scheitelpunkt der Bolzenbohrung 61, der dem Kolbenkopf 11 am nächsten liegt, liegt. Die Verstärkungsrippen 45 erstrecken sich in dem Schnitt, der in der Figur 6 gezeigt ist, ungefähr geradlinig entlang der Bolzenachse. Die oberen Kanten der Verstärkungsrippen 45, d.h. die Kanten, die dem Kolbenkopf 11 abgewandt sind, sind abgerundet. Darüber hinaus verbreitern sich die Verstärkungsrippen 45 im Bereich ihrer Anbindung an die Verbindungswände 60. Insgesamt sind alle Anbindungen verschiedener Bestandteile des Kolbenschafts 40 sanft ausgeführt, d.h. es werden scharfe Kanten und Ecken vermieden, um das Auftreten von Rissen und Brüchen in diesen sensiblen Bereichen zu vermindern. Außerdem können Öffnungen 67 in den Verstärkungsrippen 45 oder anderen Schaftabschnitten vorgesehen sein, um die Ölzirkulation bzw. Kühlmittelzirkulation im Kolbenschaft 40 zu verbessern.

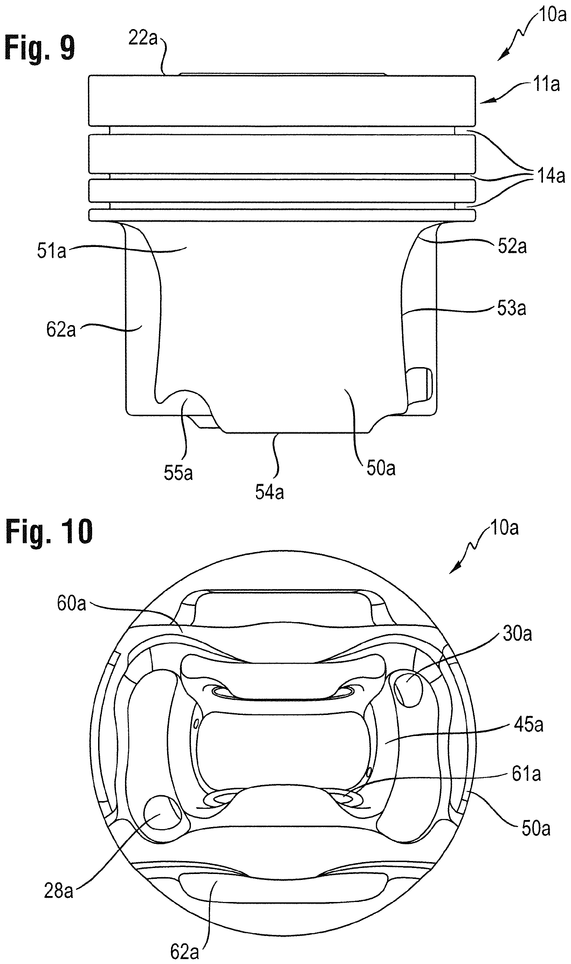

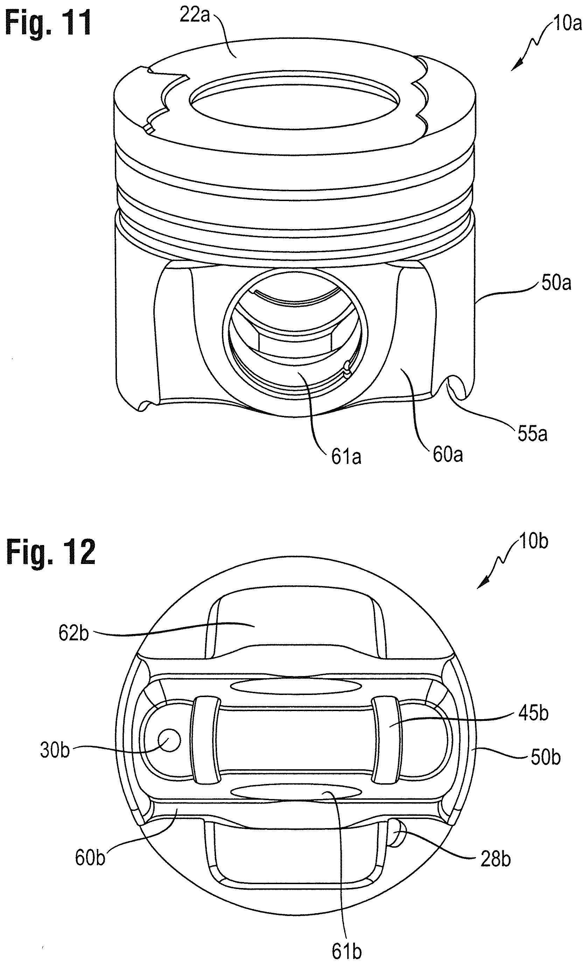

Die Verstärkungsrippen müssen nicht geradlinig entlang der Bolzenachse verlaufen, wie es aus der Figur 10 hervorgeht, die zusammen mit den Figuren 9 und 11 eine zweite Ausführungsform darstellt. Darin sind die Bezugszeichen, die den Bestandteilen der ersten Ausführungsform entsprechen, mit einem "a" versehen. Die Verstärkungsrippen 45a sind in Richtung der Bolzenachse gekrümmt ausgebildet, wobei die Krümmung dem zylindrischen Verlauf des Kolbenkopfes 11 folgt, d.h. die Verstärkungsrippen 45a sind gesehen von der Kolbenachse konvex gekrümmt. Mit der in der Figur 10 dargestellten Krümmung der Verstärkungsrippen 45a wird die Stabilität des Kolbens 10a weiter verbessert, ohne Vergrößerung des Gesamtgewichts.

In der Ausführungsform, die in den Figuren 9 und 10 gezeigt ist, sind zudem die Schaftwandabschnitte 50a bauchig ausgeführt. Hierbei weist die innere Kontur der Schaftwandabschnitte im Schnitt der Figur 10 eine geschwungene Form auf, sodass eine Verbreiterung der Schaftwandabschnitte stattfindet, mit der größten Dicke auf der Mittelachse des Kolbens, die auf der Bolzenachse und der Kolbenachse senkrecht steht.

Die besondere Form der Schaftwandabschnitte 50 geht deutlich aus der Figur 5 hervor. Im Bereich der Anbindung des Schaftwandabschnitts 50 an den Kolbenkopf 11 ist eine Verbreiterung 51 vorgesehen. Mit anderen Worten ist die Sektorlänge L1 im Bereich der Anbindung an den Kolbenkopf 11 größer als die Sektorlänge L2 der gegenüberliegenden Kante 54, d.h. der Kante des Schaftwandabschnittes 50, der dem Kolbenkopf 11 gegenüberliegt. Ausgehend vom Anbindungsbereich an dem Kolbenkopf 11 findet zunächst eine rasche Verjüngung auf eine minimale Sektorlänge L3 über Abschnitte 52 statt. Die Abschnitte 52 sind konvex gekrümmt und gehen im Bereich der minimalen Sektorlänge L3 in konkav gekrümmte Abschnitte über. Daran schließen sich geradlinige Abschnitte 53 an, die nicht parallel verlaufen, sondern allmählich bis zur Sektorlänge L2 auseinanderlaufen. Es gilt hier: L1>L2>L3

Wie es aus der Figur 5 hervorgeht, kann die Kante 54 unregelmäßig verlaufen, d.h. sie kann Vertiefungen, Abschrägungen, Krümmungen verschiedener Natur und dergleichen aufweisen. Hier sei beispielhaft auf die Ausnehmung 55a in den Figuren 9 und 11 hingewiesen, die den korrekten Lauf des Kolbens bei einer im Bereich der Ausnehmung platzierten Kühlmitteldüse zum Einspritzen von Kühlöl in die Kühlmittelzuflussöffnung 28a gewährleistet.

Mit der oben beschriebenen und in den Figuren dargestellten Gestaltung der Schaftwandabschnitte 50 findet eine ausgezeichnete Anbindung an die Verbindungswände 60 statt, wodurch eine hohe Stabilität und Festigkeit bei gleichzeitiger Verringerung des Kolbengewichts erreicht wird. Wie es aus der Figur 6 hervorgeht, sind der Kühlmittelzuflussöffnung 28 und der Kühlmittelabflussöffnung 30 zwischen den Verstärkungsrippen 45 und dem nächstgelegenen Schaftwandabschnitt 50 vorgesehen. Darüber hinaus befinden sich diese im Verbindungsbereich zwischen Schaftwandabschnitt 50 und Verbindungswand 60, d.h. in der Ecke zwischen den beiden, wodurch eine ausgezeichnete Führung des Kühlmittelzuflusses entlang der entsprechenden Innenwände des Kolbenschafts 40 stattfindet. Die Öffnungen 28, 30 sind somit von der Mittelachse des Kolbens 10, welche senkrecht zur Bolzenachse und senkrecht zur Kolbenachse verläuft, versetzt. Ein gezieltes Einspritzen mittels einer nicht dargestellten Düse wird so vereinfacht, wodurch die Kühlwirkung verbessert wird. Es sei an dieser Stelle darauf hingewiesen, dass die Bezeichnungen "Kühlmittelzuflussöffnung" und "Kühlmittelabflussöffnung" durchaus synonym zu verstehen sind, da der Einlass und der Auslass vertauscht werden können oder beide Öffnungen gleichzeitig als Einlässe und Auslässe dienen können.

Die Figuren 12 bis 15 zeigen verschiedene Ansichten eines nicht erfindungsgemäßen Kolbens.

Darin sind die Bezugszeichen, die den Bestandteilen der ersten Ausführungsform entsprechen, mit einem "b" versehen.

Die Kühlmittelzuflussöffnung 28b und die Kühlmittelabflussöffnung 30b sind nicht im Verbindungsbereich des Schaftrandabschnitts 50b und der Verbindungswand 60b und auch nicht zwischen dem Kolbenschaft 40 und der nächstliegenden Verstärkungsrippe vorgesehen, sondern der Kühlmitteleinlass 28b ist außerhalb des Kolbenschafts 40 im Bereich der Verbindung zwischen Bolzennabe 62b und Verbindungswand 60b vorgesehen. Ferner ist die Kühlmittelabflussöffnung 30b ungefähr auf der den Kolben halbierenden Ebene, die senkrecht auf der Bolzenachse steht, und zwischen dem Schaftwandabschnitt 50b, welcher der Kühlmittelzuflussöffnung 28b entfernt liegt, und der diesem nächstliegenden Verstärkungsrippe 45b vorgesehen.

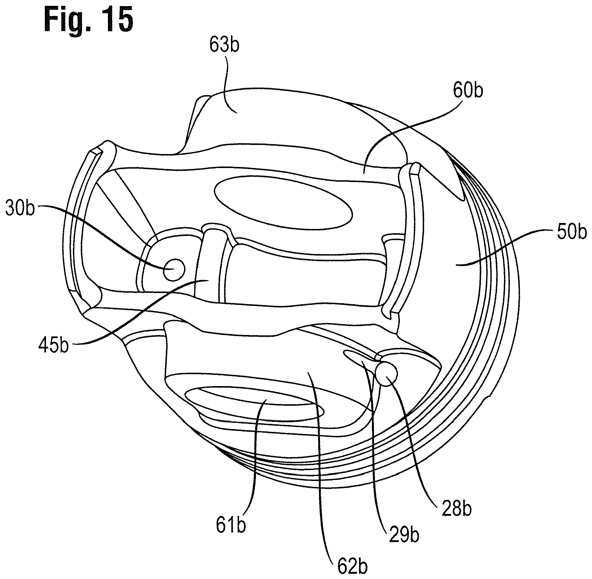

In der Figur 15 ist der Kolben von schräg unten gezeigt. Hier weist die der Kühlmittelzuflussöffnung 28b nächstliegende Bolzennabe 62b eine Ausnehmung 29b auf, welche das Einbringen des Kühlöls in die Kühlmittelzuflussöffnung 28b erleichtert. Die andere Bolzennabe 62b weist zur Stabilisierung eine Verstärkung 63b auf.

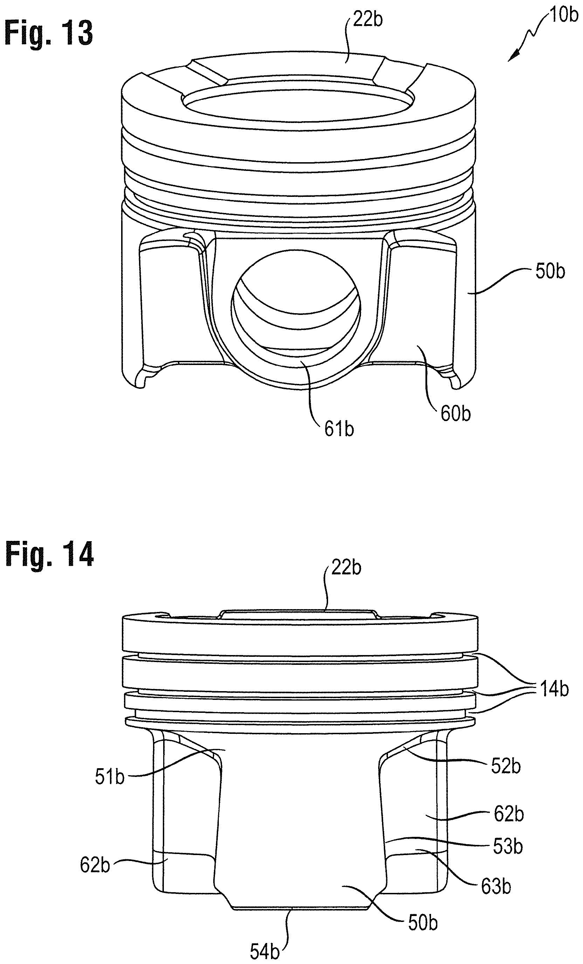

Neben der Position der Kühlmittelzuflussöffnung, der Kühlmittelabflussöffnung und der Form und Beschaffenheit der Verstärkungsrippen unterscheiden sich die Ausführungsformen auch in der Form der Schaftwandabschnitte. Aus der Figur 9, welche eine Seitenansicht der zweiten Ausführungsform enthält, geht hervor, dass ausgehend vom Anbindungsbereich an dem Kolbenkopf keine konvexe Krümmung der Abschnitte 52 vorliegen muss, sondern diese konkav gekrümmt sein können, sich rasch verjüngen und sich daran anschließend geradlinige Abschnitte 53 erstrecken, die nicht parallel sondern allmählich auseinander verlaufen. Eine sanft gewellte Form der Abschnitte 52 geht aus der Figur 14 der dritten Ausführungsform hervor.

Zur Vermeidung von Redundanz ist die Beschreibung der zweiten Ausführungsform weniger ausführlich gehalten als die der ersten Ausführungsform. Es sei daher explizit darauf hingewiesen, dass die Merkmale und technischen Wirkungen der ersten Ausführungsform auch für die zweite Ausführungsform gelten, sofern sie den Darstellungen der ersten Ausführungsform nicht widersprechen.

## Patentansprüche

1. Kolben (10) für einen Verbrennungsmotor mit einem Kolbenboden (22), einem zylindrischen Kolbenkopf (11), der sich an den Kolbenboden (22) anschließt, und einem wenigstens teilweise hohlen Kolbenschaft (40), der an dem Kolbenkopf (11) auf der dem Kolbenboden (22) abgewandten Seite angeformt ist und der zwei gegenüberliegende Schaftwandabschnitte (50) sowie zwei gegenüberliegende, die Schaftwandabschnitte (50) verbindende Verbindungswände (60) aufweist, wobei die Verbindungswände (60) jeweils eine Bolzenbohrung (61) aufweisen, wobei
der Kolbenkopf (11) einen ringförmigen Kühlkanal (18) mit mindestens einer Zuflussöffnung (28) und mindestens einer Abflussöffnung (30) aufweist,
die beiden Schaftwandabschnitte (50) sich jeweils so zum Kolbenkopf (11) hin verbreitern, dass die Sektorlänge (L1) der am Kolbenkopf (11) angeformten Seite des Schaftwandabschnitts (50) größer als die Sektorlänge (L2) der dem Kolbenkopf (11) abgewandten Seite des Schaftwandabschnitts (50) ist,
zwei Verstärkungsrippen (45), die weitgehend parallel zur Bolzenachse verlaufen oder bogenförmig verlaufen und sich im Wesentlichen von einer Bolzenbohrung (61a) zur anderen Bolzenbohrung (61a) erstrecken, am Kolbenkopf (11) angeformt sind und sich in den Hohlraum des Kolbenschafts (40) erstrecken, und
die Zuflussöffnung (28) und die Abflussöffnung (30) jeweils zwischen einer Verstärkungsrippe (45) und dem nächstliegenden Schaftwandabschnitt (50) vorgesehen sind.

2. Kolben (10) nach Anspruch 1, **dadurch gekennzeichnet, dass** sich die Zuflussöffnung (28) und/oder Abflussöffnung (30) im Bereich eines Schaftwandabschnitts (50) und/oder im Bereich einer Verbindungswand (60) befindet.

3. Kolben (10) nach Anspruch 1 oder 2, **dadurch gekennzeichnet, dass** sich die kürzeste Sektorlänge (L3) zumindest eines der Schaftwandabschnitte (50) zwischen der am Kolbenkopf (11) angeformten Seite und der dem Kolbenkopf (11) abgewandten Seite befindet.

4. Kolben (10) nach Anspruch 3, **dadurch gekennzeichnet, dass** sich die kürzeste Sektorlänge (L3) näher an der am Kolbenkopf (11) angeformten Seite als der dem Kolbenkopf (11) abgewandten Seite liegt.

5. Kolben (10) nach einem der vorhergehenden Ansprüche, **dadurch gekennzeichnet, dass** die Schaftwandabschnitte (50) zwei Kanten aufweisen, welche die am Kolbenkopf (11) angeformte Seite des Schaftwandabschnitts (50) mit der dem Kolbenkopf (11) abgewandten Seite desselben Schaftwandabschnitts (50) verbinden, wobei die Kanten ausgehenden vom Kolbenkopf (11) einen konvex gekrümmten Abschnitt aufweisen.

6. Kolben (10) nach Anspruch 5, **dadurch gekennzeichnet, dass** die konvex gekrümmten Abschnitte der Kanten jeweils in eine konkave Krümmung übergehen und sich anschließend im Wesentlichen geradlinig erstrecken.

7. Kolben (10) nach Anspruch 6, **dadurch gekennzeichnet, dass** die geradlinigen Abschnitte der Kanten nicht parallel verlaufen und/oder sich deren Abstand zu der Seite des Schaftwandabschnitts (50), die dem Kolbenkopf (11) abgewandt ist, vergrößert.

8. Kolben (10) nach einem der vorhergehenden Ansprüche, **dadurch gekennzeichnet, dass** die Verbindungswände (60) jeweils eine Bolzennabe (62) aufweisen, in der sich die betreffende Bolzenbohrung (61) befindet und die eine vergrößerte Wandstärke aufweist.

9. Kolben (10) nach Anspruch 8, **dadurch gekennzeichnet, dass** sich die Bolzennaben (62) ausgehend von den Abschnitten dünnerer Wandstärke der betreffenden Verbindungswände (60) im Wesentlichen nach außen erstrecken.

10. Kolben (10) nach einem der vorhergehenden Ansprüche, **dadurch gekennzeichnet, dass** dieser aus Aluminium oder einer Aluminiumlegierung gefertigt ist.

## Claims

1. Piston (10) for an internal combustion engine having a piston crown (22), a cylindrical piston head (11) which adjoins the piston crown (22), and an at least partially hollow piston skirt (40) which is formed integrally with the piston head (11) on the side facing away from the piston crown (22) and which has two opposed skirt wall sections (50) as well as two opposed connecting walls (60) which connect the skirt wall sections (50), wherein the connecting walls (60) each have a pin bore (61), wherein
the piston head (11) has an annular cooling duct (18) with at least one inlet opening (28) and at least one outlet opening (30),
the two skirt wall sections (50) in each case widen towards the piston head (11) in such a way that the sector length (L1) of the side of the skirt wall section (50) which is formed integrally with the piston head (11) is greater than the sector length (L2) of the side of the skirt wall section (50) facing away from the piston head (11), two reinforcing ribs (45) which run largely parallel to the pin axis or run arcuately and extend substantially from one pin bore (61 a) to the other pin bore (61a), are formed integrally with the piston head (11) and extend into the cavity of the piston skirt (40), and
the inlet opening (28) and the outlet opening (30) are in each case provided between a reinforcing rib (45) and the closest skirt wall section (50).

2. Piston (10) according to claim 1, **characterised in that** the inlet opening (28) and/or outlet opening (30) is located in the region of a skirt wall section (50) and/or in the region of a connecting wall (60).

3. Piston (10) according to claim 1 or 2, **characterised in that** the shortest sector length (L3) of at least one of the skirt wall sections (50) is located between the side formed integrally on the piston head (11) and the side facing away from the piston head (11).

4. Piston (10) according to claim 3, **characterised in that** the shortest sector length (L3) is closer to the side formed integrally with the piston head (11) than the side facing away from the piston head (11).

5. Piston (10) according to one of the preceding claims, **characterised in that** the skirt wall sections (50) have two edges which connect the side of the skirt wall section (50) formed integrally with the piston head (11) to the side of the same skirt wall section (50) facing away from the piston head (11), wherein the edges, starting from the piston head (11), have a convexly curved section.

6. Piston (10) according to claim 5, **characterised in that** the convexly curved sections of the edges in each case merge with a concave curvature and then extend substantially rectilinearly.

7. Piston (10) according to claim 6, **characterised in that** the rectilinear sections of the edges do not run parallel and/or the distance between them and the side of the skirt wall section (50) which faces away from the piston head (11) increases.

8. Piston (10) according to one of the preceding claims, **characterised in that** the connecting walls (60) in each case have a pin boss (62) in which the pin bore (61) concerned is located and which has an increased wall thickness.

9. Piston (10) according to claim 8, **characterised in that** the pin bosses (62), starting from the thinner-walled sections of the connecting walls (60) concerned, extend substantially outwards.

10. Piston (10) according to one of the preceding claims, **characterised in that** it is made from aluminium or an aluminium alloy.

## Revendications

1. Piston (10) pour un moteur à combustion interne avec un fond de piston (22), une tête de piston (11) cylindrique, qui est jointe au fond de piston (22), et une tige de piston (40) au moins en partie creuse, qui est formée au niveau de la tête de piston (11) sur le côté opposé au fond de piston (22) et qui présente deux segments de paroi de tige (50) se faisant face ainsi que deux parois de liaison (60) se faisant face reliant les segments de paroi de tige (50), dans lequel les parois de liaison (60) présentent chacune un alésage d'axe (61), dans lequel
la tête de piston (11) présente un canal de refroidissement (18) de forme annulaire avec au moins une ouverture de flux entrant (28) et au moins une ouverture de flux sortant (30),
les deux segments de paroi de tige (50) s'élargissent chacun en direction de la tête de piston (11) de telle manière que la longueur de secteur (L1) du côté, formé au niveau de la tête de piston (11), du segment de paroi de tige (50) est plus grande que la longueur de secteur (L2) du côté, opposé à la tête de piston (11), du segment de paroi de tige (50),
deux nervures de renforcement (45), qui s'étendent largement de manière parallèle par rapport à l'axe ou s'étendent de manière à présenter une forme d'arc et s'étendent sensiblement depuis un alésage d'axe (61a) en direction de l'autre alésage d'axe (61a), sont formées au niveau de la tête de piston (11) et s'étendent dans la cavité de la tige de piston (40), et
l'ouverture de flux entrant (28) et l'ouverture de flux sortant (30) sont prévues chacune entre une nervure de renforcement (45) et le segment de paroi de tige (50) le plus proche.

2. Piston (10) selon la revendication 1, **caractérisé en ce que** l'ouverture de flux entrant (28) et/ou l'ouverture de flux sortant (30) se trouvent dans la zone d'un segment de paroi de tige (50) et/ou dans la zone d'une paroi de liaison (60).

3. Piston (10) selon la revendication 1 ou 2, **caractérisé en ce que** la longueur de secteur (L3) la plus courte au moins d'un des segments de paroi de tige (50) se trouve entre le côté formé au niveau de la tête de piston (11) et le côté opposé à la tête de piston (11).

4. Piston (10) selon la revendication 3, **caractérisé en ce que** la longueur de secteur (L3) la plus courte est plus proche du côté formé au niveau de la tête de piston (11) que du côté opposé à la tête de piston (11).

5. Piston (10) selon l'une quelconque des revendications précédentes, **caractérisé en ce que** les segments de paroi de tige (50) présentent deux arêtes qui relient le côté, formé au niveau de la tête de piston (11), du segment de paroi de tige (50) au côté, opposé à la tête de piston (11), du même segment de paroi de tige (50), dans lequel les arêtes présentent, en partant de la tête de piston (11), un segment courbé de manière convexe.

6. Piston (10) selon la revendication 5, **caractérisé en ce que** les segments courbés de manière convexe des arêtes deviennent chacune une courbure concave et s'étendent par la suite sensiblement de manière rectiligne.

7. Piston (10) selon la revendication 6, **caractérisé en ce que** les segments rectilignes des arêtes ne s'étendent pas de manière parallèle et/ou leur espacement par rapport au côté du segment de paroi de tige (50), qui est opposé à la tête de piston (11), s'agrandit.

8. Piston (10) selon l'une quelconque des revendications précédentes, **caractérisé en ce que** les parois de liaison (60) présentent chacune un moyeu d'axe (62), dans lequel se trouve l'alésage d'axe (61) concerné et qui présente une épaisseur de paroi agrandie.

9. Piston (10) selon la revendication 8, **caractérisé en ce que** les moyeux d'axe (62) s'étendent sensiblement vers l'extérieur en partant des segments présentant une épaisseur de paroi plus fine des parois de liaison (60) concernées.

10. Piston (10) selon l'une quelconque des revendications précédentes, **caractérisé en ce que** celui-ci est confectionné à partir d'aluminium ou d'un alliage d'aluminium.
